# EUROPÄISCHE PATENTSCHRIFT

(11) **EP 0 670 858 B1**
(45) Veröffentlichungstag und Bekanntmachung des Hinweises auf die Patenterteilung: **29.07.1998**
(21) Anmeldenummer: 94900150.7
(22) Anmeldetag: 16.11.1993
(51) Int. Cl.: C08G 73/02, D21H 17/56

(54) **KONDENSATIONSPRODUKTE VON POLYALKYLENPOLYAMINEN, UND IHRE VERWENDUNG BEI DER HERSTELLUNG VON PAPIER**
CONDENSATION PRODUCTS OF POLYALKYLENE POLYAMINES, AND THEIR USE IN PAPERMAKING
PRODUITS DE CONDENSATION DE POLYALKYLENEPOLYAMINES, ET LEUR UTILISATION POUR LA FABRICATION DU PAPIER

(30) Priorität: 28.11.1992 DE 4240110
(43) Veröffentlichungstag der Anmeldung: 13.09.1995
(73) Patentinhaber: BASF AKTIENGESELLSCHAFT, 67056 Ludwigshafen (DE)
(72) Erfinder: SCHERR, Guenter, D-67065 Ludwigshafen (DE); REUTHER, Wolfgang, D-69118 Heidelberg (DE); LORENCAK, Primoz, D-96118 Heidelberg (DE); MOENCH, Dietmar, D-69469 Weinheim (DE); LINHART, Friedrich, D-69123 Heidelberg (DE); WEISER, Juergen, D-69198 Schriesheim (DE)
(86) Internationale Anmeldenummer: EP9303205
(87) Internationale Veröffentlichungsnummer: WO9412560

(56) Entgegenhaltungen:
- EP-A- 0 074 558
- EP-A- 0 471 594
- DE-A- 2 434 816
- DE-C- 2 434 816
- FR-A- 2 280 670
- PATENT ABSTRACTS OF JAPAN vol. 10, no. 230 (C-365)(2286) 9. August 1986 & JP,A,61 064 324 (NIPPON SHOKUBAI KAGAKU KOGYO CO LTD)

## Beschreibung

Die Erfindung betrifft Kondensationsprodukte von Polyalkylenpolyaminen, die durch teilweise Amidierung von Polyalkylenpolyaminen und anschließende Kondensation der teilweise amidierten Polyalkylenpolyamine mit mindestens bifunktionellen Vernetzern erhältlich sind, Verfahren zur Herstellung der Kondensationsprodukte durch teilweise Amidierung von Polyalkylenpolyaminen und Kondensation der teilweise amidierten Polyalkylenpolyamide mit mindestens bifunktionellen Vernetzern und die Verwendung der Kondensationsprodukte als Entwässerungs-, Flockungs- und Retentionsmittel und als Fixiermittel bei der Herstellung von Papier.

Aus der DE-A-2 046 304 sind Waschmittel bekannt, die als Weichmacher teilweise amidierte Polyethylenimine enthalten. Diese Produkte werden durch Umsetzung eines Polyethylenimins mit einer Fettsäure oder einem Fettsäureester bei höheren Temperaturen, z.B. bei 150°C, hergestellt.

Aus der DE-C-2 434 816 ist ein Verfahren zur Herstellung von stickstoffhaltigen Kondensationsprodukten bekannt, bei dem man Polyamidoamine mit Ethylenimin pfropft und die so erhältlichen Umsetzungsprodukte mit α,ω-Bis(chlorhydrin)ethern von Polyalkylenoxyden bei Temperaturen von 20 bis 100°C reagieren läßt und die Reaktion bis zur Bildung hochmolekularer, gerade noch wasserlöslicher Harze führt, die - gemessen bei 20°C in 20 gew.-%iger wäßriger Lösung - eine Viskosität von mehr als 300 mPas aufweisen. Die so erhältlichen Kondensationsprodukte werden als Retentions-, Flockungs- und Entwässerungsmittel bei der Papierherstellung verwendet.

Aus der DE-C-2 436 386 ist die Verwendung von stickstoffhaltigen Kondensationsprodukten auf Basis von Polyalkylenpolyaminen als Entwässerungsbeschleuniger und Retentionsmittel in der Papierindustrie bekannt. Die stickstoffhaltigen Kondensationsprodukte werden durch Umsetzung von Polyalkylenpolyaminen, die 15 bis 500 Alkylenimin-Einheiten enthalten, mit α,ω-Chlorhydrinethern von Polyethylenoxyden, die 18 bis 90 Ethylenoxyd-Einheiten enthalten, bei 20 bis 100°C unter Bildung hochmolekularer, noch wasserlöslicher Harze hergestellt.

Aus der DE-C-2 916 356 ist ein Verfahren zur Herstellung von wasserlöslichen Polyetheraminen bekannt, bei dem man Di- oder Polyamine mit 2 bis 10 Stickstoffatomen mit Chlorhydrinethern aus 1 Mol eines zweiwertigen Alkohols mit 2 bis 5 Kohlenstoffatomen, deren Ethoxylierungsprodukten, die bis zu 18 Ethylenoxyd-Einheiten enthalten, Glyzerin oder Polyglyzerin, das bis zu 15 Glyzerineinheiten enthält, und mindestens 2 bis 8 Mol Epichlorhydrin zunächst in polaren, mit Wasser mischbaren Lösemitteln in Abwesenheit von Wasser oder unter weitgehendem Ausschluß von Wasser bei Temperaturen von 110 bis 200°C kondensiert und dann eine Alkalimetall- oder Erdalkalimetallbase in einer solchen Menge zugibt, um mindestens 20 % des bei der Kondensation entstehenden Chlorwasserstoffs zu neutralisieren. Im Anschluß daran erfolgt noch eine Nachkondensation. Die Kondensationsprodukte werden als Flockungs-, Retentions- und Entwässerungsmittel bei der Herstellung von Papier verwendet.

Von den oben beschriebenen Kondensationsprodukten haben sich insbesondere die aus der DE-C-2 434 816 bekannten Stoffe in der Praxis als Retentions- und Entwässerungsmittel bei der Papierherstellung bewährt. Alle oben genannten Kondensationsprodukte haben jedoch praktisch keine fixierende Wirkung für Leimungsmittel oder Störstoffe bei der Herstellung von Papier. Sie sind zudem mehr oder weniger anfällig gegenüber Störstoffen, die sich aufgrund der zunehmenden Schließung der Wasserkreisläufe in Papiermaschinen im Papierstoff anreichern.

Der vorliegenden Erfindung liegt die Aufgabe zugrunde, neue Stoffe zur Verfügung zu stellen. Eine weitere Aufgabe besteht darin, für die Papierherstellung ein Hilfsmittel zur Verfügung zu stellen, das gleichzeitig als Fixiermittel und als Entwässerungs-, Flockungs- und Retentionsmittel wirkt.

Die Aufgaben werden erfindungsgemäß gelöst mit Kondensationsprodukten von Polyalkylenpolyaminen, die erhältlich sind durch
(a) teilweise Amidierung von Polyalkylenpolyaminen mit Ameisensäure, Essigsäure, Propionsäure, Buttersäure, Caprinsäure, 2-Ethylhexansäure, Benzoesäure, Laurinsäure, Myristinsäure, Palmitinsäure, Stearinsäure, Ölsäure, Linolsäure, Linolensäure, Arachidinsäure, Erucasäure, Behensäure oder Fettsäuregemischen, die aus in der Natur vorkommenden Fettsäureestern gewonnen werden, Halbestern von Dicarbonsäuren oder Alkyldiketenen und
(b) Kondensation der teilweise amidierten Polyalkylenpolyamine mit mindestens bifunktionellen Vernetzern, die als funktionelle Gruppe eine Halogenhydrin-, Glycidyl-, Aziridin- oder Isocyanat-Einheit oder ein Halogenatom aufweisen,
zu vernetzten Polyalkylenpolyaminen, die in 20 gew.-%iger wäßriger Lösung bei 20°C eine Viskosität von mindestens 100 mPas haben.

Gegenstand der Erfindung ist außerdem ein Verfahren zur Herstellung der genannten Kondensationsprodukte, bei dem man
(a) Polyalkylenpolyamine durch Reaktion mit Ameisensäure, Essigsäure, Propionsäure, Buttersäure, Caprinsäure, 2-Ethylhexansäure, Benzoesäure, Laurinsäure, Myristinsäure, Palmitinsäure, Stearinsäure, Ölsäure, Linolsäure, Linolensäure, Arachidinsäure, Erucasäure, Behensäure oder Fettsäuregemischen, die aus in der Natur vorkommenden Fettsäureestern gewonnen werden, Halbestern von Dicarbonsäuren oder Alkyldiketenen teilweise amidiert und
(b) die teilweise amidierten Polyalkylenpolyamine mit mindestens bifunktionellen Vernetzern, die als funktionelle Gruppe eine Halogenhydrin-, Epoxi-, Aziridin- oder Isocyanat-Einheit oder ein Halogenatom aufweisen,
im Gewichtsverhältnis (a) : (b) von 1 : 0,001 bis 1 : 10 zu vernetzten Polyalkylenpolyaminen umsetzt, die in 20 gew.-%iger wäßriger Lösung bei 20°C eine Viskosität von mindestens 100 mPas haben.

Die zuletzt beschriebene Aufgabe wird gelöst durch die Verwendung der Kondensationsprodukte als Entwässerungs-, Flockungs- und Retentionsmittel und als Fixiermittel bei der Herstellung von Papier.

Die erfindungsgemäßen Kondensationsprodukte werden durch Vernetzung teilweise amidierter Polyalkylenpolyamine hergestellt. Hierfür können sämtliche Polyalkylenpolyamine eingesetzt werden, z.B. Diethylentriamin, Triethylentetramin, Tetraethylenpentamin, Pentaethylenhexamin, Diaminopropylethylendiamin, Trisaminopropylamin und Polyethylenimine. Die Polyethylenimine haben vorzugsweise eine mittlere Molmasse (M_{W}) von mindestens 300. Die mittlere Molmasse der Polyethylenimine kann bis zu 1000000 betragen. Vorzugsweise kommen Polyethylenimine in Betracht, die Molmassen von 1200 bis 25000 haben.

Im ersten Verfahrensschritt (a) zur Herstellung der erfindungsgemäßen Kondensationsprodukte werden die Polyalkylenpolyamine teilweise amidiert, so daß beispielsweise 0,1 bis 90 % der amidierbaren Stickstoffatome in den Polyalkylenpolyaminen als Amidgruppe vorliegen. Die primären und sekundären Stickstoffatome in den Polyalkylenpolyaminen sind amidierbar, wobei primäre und sekundäre Aminogruppen jeweils nur mit einer Carbonsäure reagieren. Die Polyalkylenpolyamine werden vorzugsweise zu 1 bis 30, meistens nur bis 20 % amidiert. Die amidierten Polyalkylenpolyamine müssen nämlich noch NH-Gruppen aufweisen, damit sie mit einem Venetzer zur Reaktion gebracht werden können.

Die Amidierung der Polyalkylenpolyamine erfolgt in bekannter Weise z.B. durch Umsetzung mit Carbonsäuren. Die Carbonsäuren können beispielsweise 1 bis 28, vorzugsweise 1 bis 18 Kohlenstoffatome enthalten. Sie können gesättigt sein oder auch eine oder gegebenenfalls mehrere ethylenisch ungesättigte nichtkonjugierte Doppelbindungen enthalten. Geeignete Carbonsäuren sind beispielsweise Ameisensäure, Essigsäure, Propionsäure, Buttersäure, Caprinsäure, 2-Ethylhexansäure, Benzoesäure, Laurinsäure, Myristinsäure, Palmitinsäure, Stearinsäure, Ölsäure, Linolsäure, Arachidinsäure, Erucasäure, Behensäure, sowie Fettsäuregemische, die beispielsweise aus in der Natur vorkommenden Fettsäureestern gewonnen werden, z.B. aus Kokosfett, Talg, Sojaöl, Leinöl, Rapsöl und Fischöl. Ebenso sind Halbester von Dicarbonsäuren, wie Monomethylbernsteinsäureester, Monoethylbernsteinsäureester, Monomethylmaleinsäureester, Monomethylfurmarsäureester und Monotertiär-butylmaleinsäureester sowie monoethylenisch ungesättigte Carbonsäuren wie Acrylsäure, und Methacrylsäure geeignet. Vorzugsweise verwendet man C₁- bis C₁₈-Carbonsäuren oder deren Ester mit einwertigen C₁- bis C₄-Alkoholen. Von den Carbonsäuren mit einer niedrigen Kohlenstoffzahl, z.B. bis zu C₈-Carbonsäuren verwendet man vorzugsweise gesättigte Carbonsäuren, während man von den Carbonsäuren einer höheren Kohlenstoffzahl im Molekül auch ungesättigte Carbonsäuren mit Vorteil einsetzen kann, z.B. Ölsäure oder Linolensäure.

Außer den genannten Carbonsäuren und Carbonsäureestern einer Kohlenstoffzahl von 1 bis 4 im Alkoholrest können Carbonsäureanhydride, Carbonsäurehalogenide oder Alkyldiketene zur Herstellung der teilweise amidierten Polyalkylenpolyamine verwendet werden. Von besonderem Interesse sind hierbei die Umsetzungsprodukte von Stearyl-, Palmityl-, Lauryl-, Oleyl-, Behenyldiketen oder von Gemischen der genannten Diketene mit Polyalkylenpolyaminen und insbesondere Polyethyleniminen. Selbstverständlich sind auch die Umsetzungsprodukte von Polyalkylenpolyaminen mit kurzkettigen Alkyldiketenen, wie Diketen, von praktischem Interesse. Die Reaktionstemperaturen bei der Amidierung liegen in der Regel bei 20°C bis 250°C, vorzugsweise bei 130°C bis 180°C.

Im Verfahrensschritt (b) werden die teilweise amidierten Polyalkylenpolyamine mit mindestens bifunktionellen Vernetzern zur Reaktion gebracht, die als funktionelle Gruppe eine Halogenhydrin-, Glycidyl-, Aziridin- oder Isocyanat-Einheit oder ein Halogenatom aufweisen. Vernetzer dieser Art sind zum Teil in den zum Stand der Technik angegebenen Literaturstellen genannt. Durch die Umsetzung der teilweise amidierten Polyalkylenpolyamine mit den Vernetzern wird das Molekulargewicht der amidierten Polyamidoamine erhöht. Geeignete Vernetzer sind beispielsweise Epihalogenhydrine, insbesondere Epichlorhydrin, sowie α,ω-Bis-(chlorhydrin)polyalkylenglykolether und die daraus durch Behandlung mit Basen erhältlichen α,ω-Bislepoxyde) von Polyalkylenglykolethern. Die Chlorhydrinether werden beispielsweise dadurch hergestellt, daß man Polyalkylenglykole im Molverhältnis 1 zu mindestens 2 bis 5 mit Epichlorhydrin umsetzt. Geeignete Polyalkylenglykole sind beispielsweise Polyethylenglykol, Polypropylenglykol und Polybutylenglykole sowie Blockcopolymerisate von C2-bis C4-Alkylenoxyden. Die mittleren Molmassen (M_{W}) der Polyalkylenglykole betragen z.B. 200 bis 6000 und liegen vorzugsweise in dem Bereich von 300 bis 2000 g/mol. α,ω-Bis(chlorhydrin)polyalkylenglykolether dieser Art werden beispielsweise in der zum Stand der Technik angegebenen DE-C-2 434 816 beschrieben. Wie darin ebenfalls angegeben ist, entstehen aus den Dichlorhydrinethern durch Behandlung mit Basen die entsprechenden Bisglycidylether. Außerdem eignen sich als Vernetzer α,ω-Dichlorpolyalkylenglykole, die beispielsweise als Vernetzer aus der EP-B-0 025 515 bekannt sind. Andere geeignete Vernetzer sind α,ω- oder vicinale Dichloralkane, beispielsweise 1,2-Dichlorethan, 1,2-Dichlorpropan, 1,3-Dichlorpropan, 1,4-Dichlorbutan und 1,6-Dichlorhexan. Beispiele für weitere Vernetzer sind die Umsetzungsprodukte von mindestens dreiwertigen Alkoholen mit Epichlorhydrin zu Reaktionsprodukten, die mindestens zwei Chlorhydrin-Einheiten aufweisen, z.B. verwendet man als mehrwertige Alkohole Glycerin, ethoxilierte oder propoxilierte Glycerine, Polyglycerine mit 2 bis 15 Glycerin-Einheiten im Molekül sowie gegebenenfalls ethoxilierte und/oder propoxilierte Polyglycerine. Vernetzer dieser Art sind beispielsweise aus der oben angegebenen DE-C-2 916 356 bekannt. Außerdem eignen sich Vernetzer, die blockierte Isocyanat-Gruppen enthalten, z.B. Trimethylhexamethylendiisocyanat blockiert mit 2,2,3,6-Tetramethylpiperidinon-4. Solche Vernetzer sind z.B. bekannt aus DE-A-4 028 285 sowie Aziridin-Einheiten enthaltende Vernetzer auf Basis von Polyethern oder substituierten Kohlenwasserstoffen, z.B. 1,6-Bis-N-aziridinohexan, vgl. US-A-3 977 923. Es ist selbstverständlich auch möglich, Mischungen aus zwei oder mehreren Vernetzern zur Molekulargewichtserhöhung der amidierten Polyalkylenpolyamine zu verwenden.

Zur Herstellung der erfindungsgemäßen Kondensate setzt man
(a) die amidierten Polyalkylenpolyamine mit den
(b) mindestens bifunktionellen Vernetzer im Gewichtsverhältnis (a):(b) von 1:0,001 bis 1:10, vorzugsweise 1:0,01 bis 1:3 um.

Die Vernetzung der unter (a) beschriebenen amidierten Polyalkylenpolyamine mit den unter (b) angegebenen Vernetzern erfolgt bei Temperaturen von 0 bis 200, vorzugsweise 50 bis 80°C. Die Reaktion kann in Substanz oder bevorzugt in einem Lösemittel vorgenommen werden. Bevorzugtes Lösemittel ist Wasser. Daneben eignen sich auch Alkohole, z.B. C₁- bis C₁₂-Alkohole, wie Methanol, Ethanol, n-Propanol, Isopropanol und Butanole sowie Ether, z.B. Polyethylenglykoldimethylether, Tetrahydrofuran und Mischungen dieser Lösemittel mit sich selbst oder (und) Wasser. Die Umsetzung der Komponenten (a) und (b) erfolgt vorzugsweise in wäßrigem Medium. Der pH-Wert bei der Umsetzung liegt üblicherweise in dem Bereich von 10 bis 14, vorzugsweise 10 bis 12. Hierzu kann es erforderlich werden, während der Kondensationsreaktion eine Base oder ein Gemisch von Basen zuzusetzen. Geeignete Basen sind beispielsweise Natronlauge, Kalilauge, Calciumhydroxid, Bariumhydroxid, tertiäre Amine, z.B. Triethylamin, Triethanolamin oder Tri-n-propylamin. Vorzugsweise verwendet man als Base Natriumhydroxid. Die Kondensation kann kontinuierlich oder diskontinuierlich durchgeführt werden. Um besonders hochmolekulare Kondensationsprodukte herzustellen, setzt man beispielsweise relativ hochmolekulare Polyethylenimine, z.B. solche mit mittleren Molmassen (M_{W}) von 1000 bis 10000 mit Bis-Chlorhydrinethern von Polyalkylenglykolen eines Molekulargewichts von 300 bis 6000, vorzugsweise 800 bis 1500, um. Sehr hochmolekulare Kondensationsprodukte entstehen beispielsweise auch bei der Kondensation von partiell amidierten Polyethyleniminen eines Molekulargewichts von mindestens 500000 mit Epichlorhydrin.

Die oben beschriebenen Kondensationsprodukte werden als Entwässerungs-, Flockungs- und Retentionsmittel und als Fixiermittel bei der Herstellung von Papier eingesetzt. Sie werden zu diesem Zweck dem Papierstoff in einer Menge von 0,01 bis 2, vorzugsweise 0,02 bis 1 Gew.-% zugesetzt, jeweils bezogen auf die Feststoffe. Die erfindungsgemäßen Kondensationsprodukte besitzen somit die Eigenschaften von typischen Fixiermitteln, z.B. Polyethyleniminen, Polydimethyldiallylammoniumchloriden oder Kondensationsprodukten aus Harnstoff/Formaldehyd/Dicyandiamid/Ammonchlorid und sind gleichzeitig Entwässerungs-, Flockungs- und Retentionsmittel. Bisher benötigte man zum Fixieren von Zusatz- und Störstoffen bei der Papierherstellung die obengenannten typischen Fixiermittel und mußte außerdem ein Entwässerungs- und Retentionsmittel bei der Papierherstellung einsetzen. Die erfindungsgemäßen Produkte haben gegenüber den bekannten ähnlich aufgebauten stickstoffhaltigen Kondensationsprodukten den Vorteil, daß sie bei der Herstellung von Papier den CSB-Wert und den kationischen Bedarf wesentlich besser reduzieren.

Die erfindungsgemäßen Kondensationsprodukte können zur Herstellung sämtlicher Papier-, Pappe- und Kartonqualitäten eingesetzt werden, z.B. Papiere für den Zeitungsdruck (Hochdruck/Offset-Druck), sogenannte mittelfeine Schreib- und Druckpapiere, Naturtiefdruckpapiere und auch leichtgewichtige Streichrohpapiere. Zur Herstellung solcher Papiere verwendet man als Hauptrohstoffkomponente Holzschliff, thermomechanischen Stoff (TMP), chemo-thermomechanischen Stoff (CTMP), Druckschliff (PGW), sowie Sulfit- und Sulfatzellstoff, die jeweils kurz- bzw. langfaserig sein können. Als Rohstoffe für die Herstellung der Pulpe kommt auch Zellstoff und Holzstoff in Betracht, der in den sogenannten integrierten Fabriken in mehr oder weniger feuchter Form direkt ohne vorherige Eindickung bzw. Trocknung weiter zu Papier verarbeitet wird und aufgrund der nicht vollständig entfernten Verunreinigungen vom Aufschluß her noch Stoffe enthält, die den üblichen Papierherstellprozeß stark stören. Nach dem erfindungsgemäßen Verfahren können sowohl füllstoff-freie als auch füllstoff-haltige Papiere hergestellt werden. Der Füllstoffgehalt im Papier kann bis maximal 30 Gew.-% betragen und liegt vorzugsweise in dem Bereich von 5 bis 25 Gew.-% Füllstoff. Geeignete Füllstoffe sind beispielsweise Clay, Kaolin, Kreide, Talkum, Titandioxid, Calciumsulfat, Bariumsulfat, Aluminiumoxid, Satinweiß oder Mischungen der genannten Füllstoffe. Sofern füllstoff-enthaltende Papiere hergestellt werden, stellt man zunächst eine wäßrige Anschlämmung von Faserstoff und Füllstoff her.

Mit besonderem Vorteil werden die erfindungsgemäßen Kondensationsprodukte bei der Papierherstellung aus Altpapier und solchen Stoffsystemen eingesetzt, die Störstoffe enthalten, die sich in zumindest teilweise geschlossenen Wasserkreisläufen von Papiermaschinen anreichern.

Die Prozentangaben in den Beispielen sind Gew.-%. Die Viskositäten wurden in einem Brookfield-Viskosimeter bei einer Konzentration von 20 Gew.-% und einer Temperatur von 20°C gemessen, sofern nichts anderes angegeben ist.

### Beispiel 1

In einem 2 Liter fassenden Kolben, der mit einem Rührer, Thermometer und einer Einrichtung zum Arbeiten unter Stickstoff ausgestattet ist, werden 799 g Polyethylenimin eines mittleren Molekulargewichts (M_{W}) von ca. 25000 vorgelegt und unter einem Stickstoffstrom auf eine Temperatur von 140°C erhitzt und innerhalb von 30 min mit 69 g Propionsäure versetzt. Die Reaktionstemperatur wird auf 180°C erhöht. Das bei der Reaktion entstehende Wasser wird kontinuierlich abgetrennt. Nach 5 h ist die Reaktion beendet. Das Polyethylenimin ist zu 5 % amidiert.

200 g des oben beschriebenen amidierten Polyethylenimins werden in 700 ml Wasser gelöst, auf 70°C erhitzt und bei dieser Temperatur portionsweise in ca. 3 h mit 36,5 ml einer 21 %igen wäßrigen Lösung eines Bis-(Chlorhydrin)polyethylenglykols vom Molekulargewicht 400 versetzt. Das Reaktionsgemisch wird 1 h auf 70°C gehalten. Nach Abschluß der Kondensationsreaktion gibt man 85 g einer 85 %igen Ameisensäure zum Reaktionsgemisch, das danach einen pH-Wert von 8 hat. Man erhält 1018 g einer 20,7 %igen wäßrigen Lösung eines vernetzten teilweise amidierten Polyethylenimins (Kondensat 1), das eine Viskosität von 884 mPas hat.

### Beispiel 2

In der in Beispiel 1 beschriebenen Apparatur werden 732 g Polyethylenimin eines mittleren Molekulargewichts (M_{W}) von ca. 25000 (Zahlenmittel) vorgelegt und unter einem Stickstoffstrom auf eine Temperatur von 140°C erhitzt. Sobald diese Temperatur erreicht ist, fügt man innerhalb von 30 min 106,7 g Benzoesäure zu und erhitzt das Reaktionsgemisch auf 180°C. Das bei der partiellen Amidierung entstehende Wasser wird kontinuierlich abdestilliert. Man erhält ein zu 5 % mit Benzoesäure amidiertes Polyethylenimin.

200 g des oben beschriebenen teilweise amidierten Polyethylenimins werden in 650 ml Wasser gelöst. Die wäßrige Lösung wird auf eine Temperatur von 70°C erwärmt und innerhalb von 240 min mit 36,3 ml einer 21 %igen wäßrigen Lösung von α,ω-Bis(chlorhydrin)ether eines Polyethylenglykols von Molekulargewicht 400 vernetzt. Der pH-Wert des Reaktionsgemisches liegt bei 11. Die Kondensationsreaktion ist nach einer weiteren Stunde beendet. Danach fügt man 90 ml Ameisensäure zu. Der pH-Wert der Reaktionsmischung beträgt dann ca. 8. Man erhält 976 g einer 22,7 %igen wäßrigen Lösung eines vernetzten, mit Benzoesäure teilweise aminierten Polyethylenimins (Kondensat 2). Eine 20 %ige wäßrige Lösung dieses Produkts hat eine Viskosität von 1012 mPas.

### Beispiel 3

In der in Beispiel 1 angegebenen Apparatur werden 430 g eines wasserfreien Polyethylenimins mit einem mittleren Molekulargewicht (M_{W}) von 25000 vorgelegt. Unter einer Stickstoffatmosphäre fügt man allmählich 90 g Essigsäure zu. Die Temperatur steigt aufgrund der exothermen Reaktion soweit an, daß das bei der Umsetzung gebildete Wasser abdestilliert. Das Reaktionsgemisch wird auf eine Temperatur von 180°C erhitzt und 4 h bei dieser Temperatur gehalten. Nachdem das bei der Reaktion entstehende Wasser abdestilliert ist, wird das Reaktiongsgemisch noch etwa 30 min bei einer Temperatur von 180°C gerührt und anschließend abgekühlt. Man erhält 511 g eines mit Essigsäure zu 15 % amidierten Polyethylenimins.

137,5 g des oben beschriebenen amidierten Polyethylenimins werden in 412,5 g Wasser gelöst. Man erhitzt die Lösung auf eine Temperatur von 70°C und fügt innerhalb von 180 min 67 ml einer 21 %igen wäßrigen Lösung des Bis-Chlorhydrinethers eines Polyalkylenglykols vom Molekulargewicht 1500 hinzu. Die Kondensation wird in Gegenwart von 5 g Natriumhydroxid innerhalb von 4 h durchgeführt. Nach Beendigung der Kondensationsreaktion fügt man 48,4 g 85 %ige Ameisensäure zu, so daß man 664 g einer 23 %igen wäßrigen Lösung eines vernetzten, amidierten Polyethylenimins (Kondensat 3) erhält. Eine 20 %ige wäßrige Lösung hat eine Viskosität von 1000 mPas.

### Anwendungstechnische Beispiele

Der chemische Sauerstoffbedarf, CSB-Wert, wurde nach DIN 38 409 bestimmt.

Der kationische Bedarf ist die Menge an Kondensat 4 (vgl. unten), die notwendig ist, um einen Liter Siebwasser zum isoelektrischen Punkt zu bringen. Die Endpunktbestimmung erfolgte potentiometrisch mittels Partikelladungsdetektor PCD 02 der Fa. Mütek GmbH, D-8036 Herrsching.

Als Vergleichsprodukte wurden folgende Polymere verwendet:

Kondensat 4: Polyamidoamin aus Adipinsäure und Diethylentriamin, das mit Ethylenimin gepfropft und mit Polyethylenglykoldichlorhydrinether vernetzt wurde, vgl. Beispiel 3 der DE-C-2 434 816.

Polymer 1: handelsübliche wäßrige Lösung von Polydiallyldimethylammoniumchlorid einer Molmasse von 100000 g/Mol als Fixiermittel.

### Beispiele 4 und 5

Man stellte mehrere Proben von Störstoffen enthaltenden Papierstoffen her, indem man jeweils zu einem Liter eines aus TMP und halbgebleichten Sulfatzellstoff bestehenden Papierstoffs der Stoffdichte 40 g/l mit einem pH-Wert von 7 und einem Mahlgrad von 68° SR (Schopper-Riegler) 3 % (bezogen auf trockenen Papierstoff) eines handelsüblichen Natrium-Ligninsulfonats hinzugab. Dann dosierte man jeweils die in Tabelle 1 angegebenen Mengen an Kondensaten bzw. Polymer. Nach 5 min wurden die Fasern abfiltriert und im Filtrat CSB-Wert und kationischer Bedarf bestimmt. Die dabei erhaltenen Ergebnisse sind in Tabelle 1 angegeben.

**Tabelle 1**

| Bsp. | Vergl.Bsp. | Polymerzugabe [%] | CSB (mg O₂/l) | | Kat. Bedarf (mg/l) | |
|---|---|---|---|---|---|---|
| | | | 0,3 | 0,6 | 0,3 | 0,6 |
| 4 | - | Kondensat 1 | 598 | 256 | 280 | 22 |
| 5 | - | Kondensat 2 | 565 | 259 | 260 | 21 |
| - | 1 | Kondensat 4 | 635 | 547 | 346 | 219 |
| - | 2 | Polymer 1 | 610 | 486 | 410 | 110 |
| - | 3 | --- | 644 | | 658 | |

### Beispiel 6

Analog den Beispielen 4 und 5 wurden mehrere Proben von Störstoffe enthaltenden Papierstoffen hergestellt, indem man anstatt Na-Ligninsulfonat jeweils zu einem Liter Papierstoff 40 ml eines Holzextrakts dosierte. Der Holzextrakt wurde durch 4stündiges Erhitzen von 250 g Holzhackschnitzel in 2,5 1 Wasser bei 120°C in einem Autoklaven hergestellt. Die Ergebnisse sind in der Tabelle 2 angegeben.

**Tabelle 2**

| Bsp. | Vergl.Bsp. | Polymerzugabe [%] | CSB (mg O₂/l) | | Kat. Bedarf (mg/l) | |
|---|---|---|---|---|---|---|
| | | | 0,3 | 0,6 | 0,3 | 0,6 |
| 6 | - | Kondensat 3 | 1204 | 1078 | 330 | 180 |
| - | 4 | Kondensat 4 | 1318 | 1220 | 540 | 460 |
| - | 5 | Polymer 1 | 1242 | 1178 | 455 | 230 |
| - | 6 | ohne Polymerzugabe | 1302 | | 665 | |

### Beispiele 7 bis 9

Zu einem Papierstoff aus 100 % unbedrucktem Zeitungspapier und 10 % Clay mit einer Stoffdichte von 2 g/l und einem pH-Wert von 7,0 wurden die in Tabelle 3 jeweils angegebenen Kondensate in einer Menge von 0,04 Gew.-%, bezogen auf trockenen Papierstoff, gegeben und anschließend, jeweils nach einer Einwirkungszeit von 30 sec, in einem Schopper-Riegler-Gerät entwässert. Die dabei ermittelte Entwässerungszeit und die optische Durchlässigkeit des Siebwassers sind für die jeweils eingesetzten Kondensate 1 bis 4 in Tabelle 3 angegeben.

**Tabelle 3**

| Beispiel | Vergleichsbeispiel | 0,04 Gew.-% Polymerzusatz | Entwässerungszeit [sec/700 ml] | optische Durchlässigkeit [%] |
|---|---|---|---|---|
| 7 | - | Kondensat 1 | 41 | 54 |
| 8 | - | Kondensat 2 | 42 | 54 |
| 9 | - | Kondensat 3 | 42 | 53 |
| - | 7 | Kondensat 4 | 42 | 53 |
| - | 8 | ohne Polymerzusatz | 86 | 17 |

### Beispiele 10 bis 12

Man stellte zunächst einen Papierstoff aus 100 % Altpapier (1/3 Illustrierte, 1/3 Wellpappe, 1/3 unbedrucktes Zeitungspapier) mit einer Stoffdichte von 2 g/l und einem pH-Wert von 7,0 her. Der Papierstoff wurde in-5 Teile geteilt. Ein Teil des Papierstoffs wurde ohne jeden weiteren Zusatz in einem Schopper-Riegler-Gerät entwässert, während die 4 anderen Proben jeweils mit einem der in Tabelle 4 angegebenen Kondensate in einer Menge von 0,08 Gew.-%, bezogen auf trockenen Papierstoff, versetzt und nach einer Einwirkungszeit von 30 sec in einem Schopper-Riegler-Gerät entwässert wurden. Die dabei erhaltenen Ergebnisse sind in Tabelle 4 angegeben.

**Tabelle 4**

| Beispiel | Vergleichsbeispiel | Polymerzusatz | Entwässerungszeit [sec/700 ml] | optische Durchlässigkeit [%] |
|---|---|---|---|---|
| 10 | - | Kondensat 1 | 37 | 62 |
| 11 | - | Kondensat 2 | 41 | 57 |
| 12 | - | Kondensat 3 | 40 | 60 |
| - | 9 | Kondensat 4 | 44 | 56 |
| - | 10 | --- | 93 | 12 |

### Beispiele 13 bis 15

Die Beispiele 10 bis 12 werden mit der einzigen Ausnahme wiederholt, daß man zum Papierstoff 1 % Wasserglas, bezogen auf trockenen Faserstoff zufügt. Die so erhaltenen Ergebnisse sind in Tabelle 5 angegeben.

**Tabelle 5**

| Beispiel | Vergleichsbeispiel | Polymerzusatz | Entwässerungszeit [sec/700 ml] | optische Durchlässigkeit [%] |
|---|---|---|---|---|
| 13 | - | Kondensat 1 | 55 | 43 |
| 14 | - | Kondensat 2 | 58 | 44 |
| 15 | - | Kondensat 3 | 59 | 44 |
| - | 11 | Kondensat 4 | 68 | 33 |
| - | 12 | --- | 97 | 11 |

## Patentansprüche

1. Kondensationsprodukte von Polyalkylenpolyaminen, dadurch gekennzeichnet, daß sie erhältlich sind durch
(a) teilweise Amidierung von Polyalkylenpolyaminen mit Ameisensäure, Essigsäure, Propionsäure, Buttersäure, Caprinsäure, 2-Ethylhexansäure, Benzoesäure, Laurinsäure, Myristinsäure, Palmitinsäure, Stearinsäure, Ölsäure, Linolsäure, Linolensäure, Arachidinsäure, Erucasäure, Behensäure oder Fettsäuregemischen, die aus in der Natur vorkommenden Fettsäureestern gewonnen werden, Halbestern von Dicarbonsäuren oder Alkyldiketenen und
(b) Kondensation der teilweise amidierten Polyalkylenpolyamine mit mindestens bifunktionellen Vernetzern, die als funktionelle Gruppe eine Halogenhydrin-, Glycidyl-, Aziridin- oder Isocyanat-Einheit oder ein Halogenatom aufweisen,
zu vernetzten Polyalkylenpolyaminen, die in 20 gew.-%iger wäßriger Lösung bei 20°C eine Viskosität von mindestens 100 mPas haben.

2. Kondensationsprodukte nach Anspruch 1, dadurch gekennzeichnet, daß sie erhältlich sind durch
(a) 0,1 bis 90 %ige Amidierung von Polyethyleniminen und
(b) Kondensation der teilweise amidierten Polyethylenimine mit Epichlorhydrin, α,ω-Bis(chlorhydrin)polyalkylenglykolethern, α,ω-Bislepoxiden) von Polyalkylenglykolethern, α,ω-Dichlorpolyalkylenglykolen, α,ω- oder vicinalen Dichloralkanen oder deren Mischungen.

3. Kondensationsprodukte nach Anspruch 1 oder 2, dadurch gekennzeichnet, daß man als Komponente (a) mit Alkyldiketenen teilweise amidierte Polyalkylenpolyamine einsetzt.

4. Kondensationsprodukte nach einem der Ansprüche 1 bis 3, dadurch gekennzeichnet, daß man als Komponente (a) zu 1 bis 30 % amidierte Polyalkylenpolyamine einsetzt.

5. Kondensationsprodukte nach einem der Ansprüche 1 bis 4, dadurch gekennzeichnet, daß man als Komponente (a) bis zu 20 % amidierte Polyalkylenpolyamine einsetzt.

6. Verfahren zur Herstellung von Kondensationsprodukten nach den Ansprüchen 1 bis 5, dadurch gekennzeichnet, daß man
(a) Polyalkylenpolyamine durch Reaktion mit Ameisensäure, Essigsäure, Propionsäure, Buttersäure, Caprinsäure, 2-Ethylhexansäure, Benzoesäure, Laurinsäure, Myristinsäure, Palmitinsäure, Stearinsäure, Ölsäure, Linolsäure, Linolensäure, Arachidinsäure, Erucasäure, Behensäure oder Fettsäuregemischen, die aus in der Natur vorkommenden Fettsäureestern gewonnen werden, Halbestern von Dicarbonsäuren oder Alkyldiketenen teilweise amidiert und
(b) die teilweise amidierten Polyalkylenpolyamine mit mindestens bifunktionellen Vernetzern, die als funktionelle Gruppe eine Halogenhydrin-, Epoxi-, Aziridin- oder Isocyanat-Einheit oder ein Halogenatom aufweisen,
im Gewichtsverhältnis (a):(b) von 1:0,001 bis 1:10 zu vernetzten Polyalkylenpolyaminen umsetzt, die in 20 gew.-%iger wäßriger Lösung bei 20°C eine Viskosität von mindestens 100 mPas haben.

7. Verfahren nach Anspruch 6, dadurch gekennzeichnet, daß man
(a) Polyethylenimine mit einer Molmasse von mindestens 300 zu 0,1 bis 90 % amidiert und
(b) die teilweise amidierten Polyethylenimine mit Epichlorhydrin, α,ω-Bis(chlorhydrin)polyalkylenglykolethern, α,ω-Bis(glycidyl)ethern von Polyalkylenglykolen, α,ω-Dichlorpolyalkylenglykolen, α,ω- oder vicinalen Dichloralkanen oder deren Mischungen
im Gewichtsverhältnis (a):(b) von 1:0,01 bis 1:3 kondensiert.

8. Verwendung der Kondensationsprodukte nach den Ansprüchen 1 bis 5 als Entwässerungs-, Flockungs- und Retentionsmittel und als Fixiermittel bei der Herstellung von Papier.

9. Verwendung nach Anspruch 8, dadurch gekennzeichnet, daß man die Kondensationsprodukte in einer Menge von 0,01 bis 2 Gew.-%, jeweils bezogen auf die Feststoffe, einem Papierstoff zusetzt.

## Claims

1. A condensate of a polyalkylenepolyamine, which is obtainable by
(a) partial amidation of the polyalkylenepolyamine with formic acid, acetic acid, propionic acid, butyric acid, capric acid, 2-ethylhexanoic acid, benzoic acid, lauric acid, myristic acid, palmitic acid, stearic acid, oleic acid, linoleic acid, linolenic acid, arachidic acid, erucic acid, behenic acid or fatty acid mixtures which are obtained from naturally occurring fatty esters, or with half-esters of dicarboxylic acids or alkyldiketenes and
(b) condensation of the partially amidated polyalkylenepolyamine with a bifunctional or polyfunctional crosslinking agent which has, as a functional group, a halohydrin, glycidyl, aziridine or isocyanate unit or a halogen atom,
to give a crosslinked polyalkylenepolyamine which, in 20% strength by weight aqueous solution at 20°C, has a viscosity of at least 100 mPa.s.

2. A condensate as claimed in claim 1, which is obtainable by
(a) from 0.1 to 90% amidation of a polyethyleneimine and
(b) condensation of the partially amidated polyethyleneimine with epichlorohydrin, an α,ω-bis(chlorohydrin)polyalkylene glycol ether, an α,ω-bis(epoxide) of a polyalkylene glycol ether, an α,ω-dichloropolyalkylene glycol or an α,ω- or vicinal dichloroalkane or a mixture thereof.

3. A condensate as claimed in claim 1 or 2, wherein a polyalkylenepolyamine which has been partially amidated with alkyldiketenes is used as component (a).

4. A condensate as claimed in any one of claims 1 to 3, wherein a polyalkylenepolyamine which has undergone from 1 to 30% amidation is used as component (a).

5. A condensate as claimed in any one of claims 1 to 4, wherein a polyalkylenepolyamine which has undergone up to 20% amidation is used as component (a).

6. A process for the preparation of a condensate as claimed in any of claims 1 to 5, wherein
(a) a polyalkylenepolyamine is partially amidated by reaction with formic acid, acetic acid, propionic acid, butyric acid, capric acid, 2-ethylhexanoic acid, benzoic acid, lauric acid, myristic acid, palmitic acid, stearic acid, oleic acid, linoleic acid, linolenic acid, arachidic acid, erucic acid, behenic acid or fatty acid mixtures which are obtained from naturally occurring fatty esters, or with half-esters of dicarboxylic acids or alkyldiketenes and
(b) the partially amidated polyalkylenepolyamine is reacted with a bifunctional or polyfunctional crosslinking agent which has, as a functional group, a halohydrin, epoxy, aziridine or isocyanate unit or a halogen atom,
in a weight ratio (a):(b) of from 1:0.001 to 1:10 to give a crosslinked polyalkylenepolyamine which, in 20% strength by weight aqueous solution at 20°C, has a viscosity of at least 100 mPa.s.

7. A process as claimed in claim 6, wherein
(a) a polyethyleneimine having a molecular weight of at least 300 is 0.1 to 90% amidated and
(b) the partially amidated polyethyleneimine is subjected to a condensation reaction with epichlorohydrin, an α,ω-bis(chlorohydrin)polyalkylene glycol ether, an α,ω-bis(glycidyl) ether of a polyalkylene glycol, an α,ω-dichloropolyalkylene glycol, or an α,ω- or vicinal dichloroalkane or a mixture thereof
in a weight ratio (a):(b) of from 1:0.01 to 1:3.

8. Use of a condensate as claimed in any of claims 1 to 5 as a drainage aid, flocculant, retention aid or fixing agent in papermaking.

9. Use as claimed in claim 8, wherein the condensate is added to a paper stock in an amount of from 0.01 to 2% by weight, based in each case on the solids.

## Revendications

1. Produits de condensation de polyalkylènepolyamines, caractérisés en ce qu'on peut les obtenir
(a) par amidation partielle de polyalkylènepolyamines avec de l'acide formique, de l'acide acétique, de l'acide propionique, de l'acide butyrique, de l'acide caprique, de l'acide 2-éthylhexanoïque, de l'acide benzoïque, de l'acide laurique, de l'acide myristique, de l'acide palmitique, de l'acide stéarique, de l'acide oléique, de l'acide linoléique, de l'acide linolénique, de l'acide arachidique, de l'acide érucasique, de l'acide béhénique ou des mélanges d'acides gras qui sont obtenus à partir d'esters d'acides gras naturels, des semi-esters d'acides dicarboxyliques ou des alkyldicétènes, et
(b) par condensation des polyalkylènepolyamines partiellement amidées avec des agents de réticulation au moins bifonctionnels, qui comportent en tant que groupe fonctionnel un motif halogénhydrine, glycidyle, aziridine ou isocyanate, ou un atome d'halogène,
pour donner des polyalkylènepolyamines réticulées qui en solution aqueuse à 20 % en poids ont à 20°C une viscosité d'au moins 100 mPa.s.

2. Produits de condensation selon la revendication 1, caractérisés en ce qu'on peut les obtenir
(a) par amidation à 0,1-90 % de polyéthylène-imines, et
(b) par condensation des polyéthylène-imines partiellement amidées à l'aide d'épichlorhydrine, d'α,ω-bis(chlorhydrine)polyalkylèneglycoléthers, d'α,ω-bis(époxydes) de polyalkylèneglycoléthers, d'α,ω-dichloropolyalkylèneglycols, d'α,ω-dichloroalcanes ou de dichloroalcanes vicinaux, ou leurs mélanges.

3. Produits de condensation selon la revendication 1 ou 2, caractérisés en ce qu'on utilise en tant que composant (a) des polyalkylènepolyamines partiellement amidées par des alkyldicétènes.

4. Produits de condensation selon l'une des revendications 1 à 3, caractérisés en ce qu'on utilise en tant que composant (a) des polyalkylènepolyamines amidées à 1-30 %.

5. Produits de condensation selon l'une des revendications 1 à 4, caractérisés en ce qu'on utilise en tant que composant (a) jusqu'à 20 % de polyalkylènepolyamines amidées.

6. Procédé pour préparer des produits de condensation selon les revendications 1 à 5, caractérisé en ce que
(a) on amide partiellement des polyalkylènepolyamines par réaction avec de l'acide formique, de l'acide acétique, de l'acide propionique, de l'acide butyrique, de l'acide caprique, de l'acide 2-éthylhexanoïque, de l'acide benzoïque, de l'acide laurique, de l'acide myristique, de l'acide palmitique, de l'acide stéarique, de l'acide oléique, de l'acide linoléique, de l'acide linolénique, de l'acide arachidique, de l'acide érucasique, de l'acide béhénique ou des mélanges d'acides gras obtenus à partir d'esters d'acides gras naturels, des semi-esters d'acides dicarboxyliques ou des alkyldicétènes, et
(b) on fait réagir les polyalkylènepolyamines partiellement amidées avec des agents de réticulation au moins bifonctionnels comportant en tant que groupe fonctionnel un motif halogénhydrine, époxy, aziridine ou isocyanate, ou un atome d'halogène,
selon un rapport pondéral (a):(b) de 1:0,001 à 1:10, pour obtenir des polyalkylènepolyamines réticulées qui, en solution aqueuse à 20 % en poids, ont à 20°C une viscosité d'au moins 100 mPa.s.

7. Procédé selon la revendication 6, caractérisé en ce que
(a) on soumet à une amidation à 0,1 à 90 % des polyéthylène-imines ayant une masse moléculaire d'au moins 300, et
(b) on condense selon un rapport en poids (a):(b) de 1:0,01 à 1:3 les polyéthylène-imines partiellement amidées avec de l'épichlorhydrine, des α,ω-bis(chlorhydrine)-polyalkylèneglycoléthers, des éthers α,ω-bis(glycidyliques) de polyalkylèneglycols, des α,ω-dichloropolyalkylèneglycols, des α,ω-dichloroalcanes ou des dichloroalcanes vicinaux, ou leurs mélanges.

8. Utilisation des produits de condensation selon les revendications 1 à 5 en tant qu'agents déshydratants, floculants ou de rétention, et en tant qu'agents de fixation lors de la fabrication du papier.

9. Utilisation selon la revendication 8, caractérisée en ce que les produits de condensation sont ajoutés à une pâte à papier en une quantité de 0,01 à 2 % en poids, dans tous les cas par rapport à l'extrait sec.
